# EUROPEAN PATENT APPLICATION

(11) **EP 4 454 599 A1**
(43) Date of publication of application: **30.10.2024**
(21) Application number: 24171453.4
(22) Date of filing: 19.04.2024
(51) Int. Cl.: A61C 7/08, A61C 7/36

(54) **BONDABLE ORTHODONTIC POST AND ALIGNMENT SYSTEM**

(30) Priority: 25.04.2023 US 202318139161
(71) Applicant: Ortho Solutions, LC dba Dynaflex, Lake St. Louis MO 63367 (US)
(72) Inventor: Buddemeyer, Darren G, Missouri, 63367 (US); Williams, Michael O, Missouri, 63367 (US); Malabey, Matthew K, Missouri, 63367 (US)
(74) Representative: Greaves Brewster LLP

(57) **Abstract**

An orthodontic post (101) comprising:
a generally cylindrical main body (102) comprising:
a bottom end (104) and an opposing top end (213);
a generally annular retaining element (205) disposed circumferentially around said main body (102);
a radial bore (208) disposed radially in said main body (102); and
an axial bore (210) in communication with said radial bore (208), and sized and shaped to receive an attaching element (103); and

a base element (201) comprising:
a top side and an opposing bottom side, said top side attached to said bottom end (104) of said main body (102); and
a bonding pattern (209) disposed on said bottom side.

## Description

### TECHNICAL FIELD

This disclosure is related to the field of orthodontics, and, in particular, to a bondable orthodontic post for use in an alignment system.

### BACKGROUND

Orthodontia is a branch of dentistry that focuses on correcting the alignment of teeth and jaws. The goal of orthodontic treatment is to improve the functionality and aesthetics of the teeth and create a healthy bite. Orthodontic treatment typically begins during childhood or adolescence when the permanent teeth are still developing, but adults can also benefit from orthodontic treatment. Orthodontic issues can be genetic and/or behavioral, or may result from illness, disease, or trauma. Common orthodontic issues include crooked or crowded teeth, overbite, underbite, crossbite, and open bite.

To correct these and other common ailments, various orthodontic appliances may be used. Such appliances include braces, aligners, and retainers, which gradually reposition the teeth and/or jaws into improved alignment. Braces generally consist of brackets that are bonded to the teeth, and wires and bands exert pressure to gradually shift tooth position. Braces work threading wires, known as archwires, through them. As the wire is tightened, it applies pressure to the teeth, gradually causing them to move. The brackets are small, square-shaped elements bonded to the front surface of each tooth using a dental adhesive. The brackets provide an anchor point for the wire, typically made of a component that is easy to clean and sanitize and that can endure the environment of the mouth, such as metal, ceramic, or plastic. The archwires are usually thin, metal wires that run through each bracket and, when tightened, apply pressure to gradually reposition the teeth. Archwires are typically held in place by small elastics or metal ligatures.

Braces must be adjusted from time to time because they are designed to gradually reposition the teeth using tensile force. As the teeth move, the force declines and adjustments are necessary to ensure that the movement continues. During an adjustment appointment, the orthodontist will typically tighten the archwire to increase tension. This usually requires the orthodontist to loosen the brackets, replace the archwire with a thicker wire, and then re-tighten the brackets.

Other orthodontic appliances operate on similar principles. For example, the Herbst appliance is used to correct bite problems such as overbites and underbites. It usually consists of two metal rods that are connected to stainless steel frameworks or structures shaped to match the contours of the molars, and is attached to the molars in the upper and lower jaw by bands. The rods are telescoping devices, usually connected by a hinge mechanism, which allows the lower jaw to be moved forward and, if necessary, upward, to correct jaw alignment and bite.

Herbst appliances must be adjusted from time to time because they, too, are designed to gradually move the lower jaw forward using tension pressure. As the therapy proceeds, this force will lessen over time, and adjustments are necessary to ensure sufficient tensioning to continue the process. During adjustment, the orthodontist typically modifies the appliance by loosening screws and moving the rods forward, which applies additional pressure on the jaw to continue shifting. If the Herbst appliance is not adjusted as needed, the jaw may not move forward as quickly as it should, which could result in longer treatment time or less effective results. Additionally, if the appliance is not adjusted properly, it could cause discomfort or irritation for the patient.

Herbst appliances are generally not removable by the patient, and so orthodontists may prefer the use of alternative treatments that can be removed. For example, correctors and aligners may be used to correct various conditions, such as malocclusion. Correctors and aligners are generally custom-made to fit over a patient's teeth, and gradually move them into desired position by applying controlled force to the teeth via the aligner structure, improving bite alignment. The corrector is a type of appliance often worn in conjunction with aligners. Correctors have small, intermaxillary elastics or springs attached to the aligners which also exert force on the teeth and jaw to correct positioning. Aligners can be manufactured in a clear plastic, which makes them less noticeable during everyday use. Depending on the severity of the malocclusion, additional equipment may be used. While correctors and aligners are generally sufficient for Class II conditions, Class III conditions may require headgear, chin cups, or Class III elastics.

A combination of braces and appliances is often used in a patient's orthodontic treatment plan. The braces are used to gradually reposition the teeth into a desired position, while the Herbst appliance repositions the jaw. While conducting both therapies at once can be highly effective in treating serious orthodontic issues, it does impose a burden on the patient, due to the need to simultaneously and frequently adjust the braces, the appliance, or both, and it imposes a cost and burden on the orthodontist in stocking multiple parts and specialized tools for placing, adjusting, removing, and replacing each product.

### SUMMARY OF THE INVENTION

The following is a summary of the invention in order to provide a basic understanding of some aspects of the invention. This summary is not intended to identify key or critical elements of the invention or to delineate the scope of the invention. The sole purpose of this section is to present some concepts of the invention in a simplified form as a prelude to the more detailed description that is presented later.

Because of these and other problems in the art, described herein, among other things, is an orthodontic post comprising: a generally cylindrical main body comprising: a bottom end and an opposing top end; a generally annular retaining element disposed circumferentially around the main body; a radial bore disposed radially in the main body; and an axial bore in communication with the radial bore, and sized and shaped to receive an attaching element; and a base element comprising: a top side and an opposing bottom side, the top side attached to the bottom end of the main body; and a bonding pattern disposed on the bottom side.

In the embodiment of the orthodontic post, the axial bore extends from the top end to the bottom end and comprises a threaded portion disposed at the top end.

In the embodiment of the orthodontic post, the retaining element is disposed coaxially with a major axis of the main body and has a radius greater than a radius of the main body.

In the embodiment of the orthodontic post: the radial bore is sized and shaped to receive an archwire; the radial bore extends from one side of the main body to an opposing side; a major axis of the radial bore generally perpendicularly intersects the main axis of the main body; and the radial bore is disposed at the bottom end.

In the embodiment of the orthodontic post, the bonding pattern comprising a plurality of interconnecting channels in the bottom side of the base element, the plurality of interconnecting channels being sized, shaped, and configured to increase a bondable surface area of the bottom side.

In the embodiment of the orthodontic post, the base element is generally in the configuration of a rectangular prism having a flexed, arcuate cross-section in at least a first dimension.

In the embodiment of the orthodontic post, the base element has a generally rectangular cross-section in a second dimension perpendicular to the first dimension.

In the embodiment of the orthodontic post, the main body is attached to and centered on, and extends from, the top side of the base element such that the major axis of the main body generally perpendicularly intersects a tangent line of the arcuate cross-section at a midpoint of the top side of the base element.

In the embodiment of the orthodontic post, at least one channel in the plurality of channels terminates at a lateral edge of the base element.

In the embodiment of the orthodontic post, the bottom side of the base element is sized and shaped to adhere to a tooth.

In the embodiment of the orthodontic post, a major axis of the radial bore is generally parallel to the tangent line and generally perpendicularly intersects the major axis of the main body.

In an embodiment, an orthodontic system comprises the orthodontic post; and an attaching element having a head element having a radius greater than the radius of the main body, and an attached pin extending generally perpendicularly from a main axis of the head element, the pin having threads corresponding to the threaded portion of the axial bore.

In the embodiment of the orthodontic system, the attaching element is a hybrid orthodontic screw.

In an embodiment, a method of using the orthodontic system comprises: bonding the orthodontic post to a tooth using an orthodontic adhesive; passing an archwire through the radial bore; receiving the pin in the axial bore; counterrotating the threads of the pin unto the threaded portion; and a distal end of the pin holding the archwire against the base element.

In an embodiment, a method of using the orthodontic system further comprises: loosening the pin such that the distal end does not hold the archwire; removing the archwire from the radial bore; passing a second archwire through the radial bore; receiving the pin in the axial bore; counterrotating the threads of the pin unto the threaded portion; and the distal end holding the second archwire against the base element.

In the embodiment of the orthodontic system, the orthodontic system further comprises an orthodontic appliance having at least one orthodontic connector.

In an embodiment, a method of using the orthodontic system comprises: bonding the orthodontic post to a tooth using an orthodontic adhesive; receiving the orthodontic connector on the retaining element; receiving the pin in the axial bore; counterrotating the threads of the pin unto the threaded portion; and retaining the orthodontic connector between the head element and the retaining element.

In an embodiment, a method of using the orthodontic system further compres: removing the pin from the axial bore; removing the orthodontic connector from the orthodontic post; adjusting the orthodontic appliance; receiving the orthodontic connector on the retaining element; receiving the pin in the axial bore; counterrotating the threads of the pin unto the threaded portion; and retaining the orthodontic connector between the head element and the retaining element.

In an embodiment, a method of using the orthodontic appliance comprises an aligner.

In an embodiment, a method of using the orthodontic connector comprises an eyelet.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
FIG. 1 provides a perspective view of an orthodontic post according to the present disclosure.
FIG. 2 provides an alternative perspective view of an orthodontic post according to the present disclosure.
FIG. 3A provides a top elevation view of an orthodontic post according to the present disclosure.
FIG. 3B provides a sectional view of the orthodontic post of FIG. 3A.
FIG. 4 provides a perspective view of an orthodontic post according to the present disclosure with an attaching element installed.
FIG. 5 provides an alternative perspective view of an orthodontic post according to the present disclosure with an attaching element installed.
FIG. 6A provides a top elevation view of an orthodontic post according to the present disclosure with an attaching element installed.
FIG. 6B provides a sectional view of the orthodontic post and attaching element of FIG. 6A.
FIG. 7 provides a perspective view of an orthodontic post according to the present disclosure with an attaching element installed on an archwire.
FIG. 8 provides a perspective view of an orthodontic post according to the present disclosure in use with an orthodontic appliance.
FIG. 9 provides a perspective view of an orthodontic post according to the present disclosure in use with an alternative orthodontic appliance.

### DETAILED DESCRIPTION

The following detailed description and disclosure illustrates by way of example and not by way of limitation. This description will clearly enable one skilled in the art to make and use the disclosed systems and methods, and describes several embodiments, adaptations, variations, alternatives and uses of the disclosed systems and methods. As various changes could be made in the above constructions without departing from the scope of the disclosures, it is intended that all matter contained in the description or shown in the accompanying drawings shall be interpreted as illustrative and not in a limiting sense.

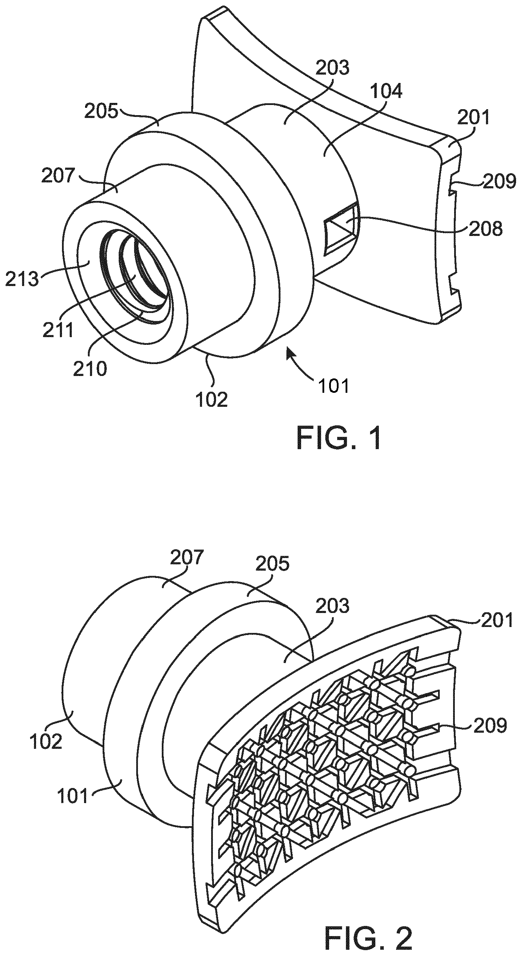

FIG. 1 depicts an embodiment of a bondable orthodontic post (101) to which appliances (801) may be affixed via springs, wires, or other orthodontic connectors (803) in an orthodontic therapy system. In FIG. 1, the depicted orthodontic post (101) comprises a main body (102) having a bottom end (104) and an opposing top end (213), with an elongated, generally cylindrical body (102) extending therebetween. The depicted body (102) is logically separated into two sections (203) and (207) by a retaining element (205) disposed on the body (102) at a point between the top end (213) and bottom end (104). The depicted retaining element (205) is a generally annular member disposed circumferentially around the body (102) and having a radius greater than the radius of the body (102).

The radius of the body (102) will generally be selected to accommodate, receive, and/or retain an orthodontic connector (803) disposed circumferentially around the body (102) at the retaining section (207) between a top surface of the retaining element (205) and the top end (213) of the body (102). An attaching element (103) may be affixed to the orthodontic post (101) to retain the orthodontic connector (803). Likewise, the retaining element (205) will generally be sized and shaped, including but not necessarily limited to the selection of radius, to retain such an orthodontic connector (803) at the retaining section (207) between the top surface of the retaining element (205) and the attaching element (103).

By way of example and not limitation, if the orthodontic connector (803) is an eyelet affixed to an orthodontic device (801), and the eyelet (803) has a particular radius, then the radius of the body (102) will be slightly less than that of the eyelet (803), and the radius of the retaining element (205) will be sufficiently larger than the radius of the eyelet (803) to retain the eyelet (803) above the top surface of the retaining element (205). This not only retains the eyelet (803), but inhibits vertical movement of the eyelet (803) along the body (102), which maintains more constant tension on the appliance (801), minimizes patient discomfort, and reduces the potential for pinching soft tissue nearby. In an embodiment, the distance between the top of the retaining element (205) and the bottom of the attaching element (103) when attached is about the same as the thickness of the corresponding orthodontic connector (803).

The depicted orthodontic post (101) also comprises a base element (201) affixed to the bottom end (104) of the body (102). The depicted base element (201) is in the configuration of a bonding pad, which is shown as a thin rectangular prism flexed or distorted to a slightly arcuate shape, which (disregarding the recesses formed by the bonding pattern (209) described elsewhere herein) has a generally rectangular cross-section in a first axial dimension, and a slightly arcuate or "rainbow"-shaped cross-section in a second dimension. The size, shape, and configuration of the arcuate cross-section corresponds to the surface profile of a tooth (805) to which the base element (201) is to be bonded.

The depicted base element (201) comprises a bonding pattern (209), which is more visible in FIG. 2. The bonding pattern (209) is a pattern of recesses defined by material removed from the end of the base element (201) opposing the side to which the body (102) is attached. This is the side of the base element (201) that is bonded to the tooth (805) using a dental or orthodontic adhesive or cement. The purpose of the bonding pattern (209) is to increase the available surface area for the adhesive, thus improving the strength and rigidity of the bond.

In the depicted embodiment, the bonding pattern (209) comprises a series of intersecting channels, including at least some channels which terminate at, and provide fluid communication to, one or more lateral edges of the base element (201). In the depicted embodiment of the base element (201), four such channels exist. However, this is by no means limiting, nor is the depicted bonding pattern (209). In other embodiments, alternative bonding patterns (209) may be used, which may have fewer or more channels of differing configurations terminating at literal edges (including, without limitation, zero such channels). In the depicted embodiment), the two sections (203) and (207) of the body (102), the retaining element (205), and the base element (201) are monolithically constructed. In an alternative embodiment, they may be separately constructed and assembled.

In the depicted embodiment, the body (102) further comprises a through channel (208) disposed between the base element (201) and the retaining element (205). In the depicted embodiment, the through channel (208) extends radially from one side of the body (102) to the opposite side, intersecting an axial center channel (210) as described elsewhere herein. The main axis of the depicted through channel (208) perpendicularly intersects the main axis of the body (102).

The depicted through channel (208) has a generally square or rectangular cross-section at the outer surface of the body (102), and is sized and shaped to receive an archwire (701), which can be threaded through the channel (208) from one side to the other. This enables the orthodontic post (101) to be used with either or both braces and orthodontic appliances (801), or the archwire (701) may be used to attach other dental appliances (801). The depicted channel (208) is a generally rectangular or square element, but other shapes are possible, including rounded, triangular, or other such shapes. Generally, the width and height of the channel (208) is selected, and the channel (208) is sized and shaped, to accommodate or receive a maximum thicknesses of archwire (701) in accordance with common industry practice. The depicted channel (208) is disposed on an axis parallel to the major axis of the base element (201), as the base element (201) is generally bonded to the tooth (805) such that its longer dimension extends laterally from the front to back of the tooth (805), and the shorter dimension extends from top to bottom. Thus, the archwire (701) may be threaded laterally through the channel (208) from the front to back of the tooth (805) (or vice versa).

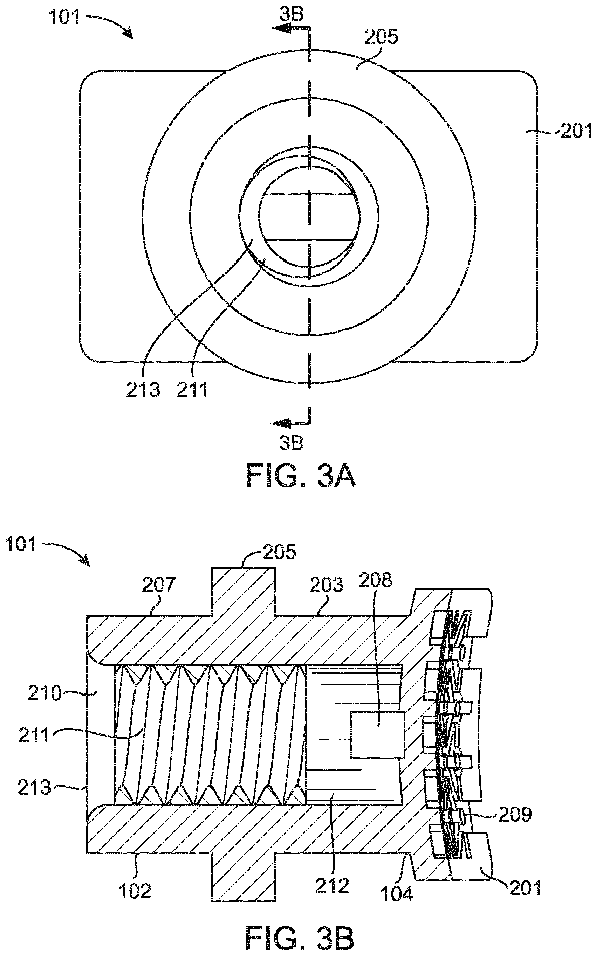

The depicted orthodontic post (101) further comprises a hollow, axial center bore or channel (210), as shown in, among other drawings, FIGs. 3A and 3B. This channel (210) extends from the top end (213) of the body to the base element (201). The depicted channel (210) is generally in the configuration of a hollow cylinder having a first threaded section (211) and a second unthreaded section (212). At the top end (213), the radius of the channel (210) gradually flares to form a trumpet-shaped opening having a contour corresponding to that of the attaching element (103).

In the depicted embodiment, the threaded section (211) is disposed proximal to the open top end (213) in the main body (102) and is configured to receive the corresponding threads on the body of the attaching element (103). The unthreaded section (212) is adjacent the threaded section (211) and in communication with the through channel (208). In this fashion, an archwire (701) threaded through the channel (208) will pass through the axial center of the orthodontic post (101), and an attaching element (103) may be threaded into the orthodontic post (101) until its distal end contacts the archwire (701), pinning it in place against the base element (201).

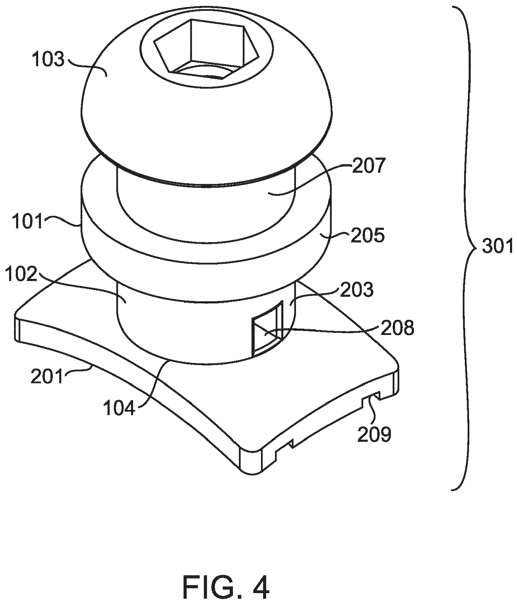

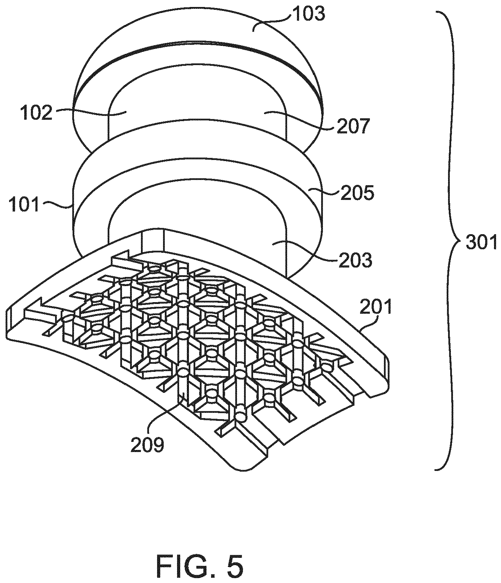

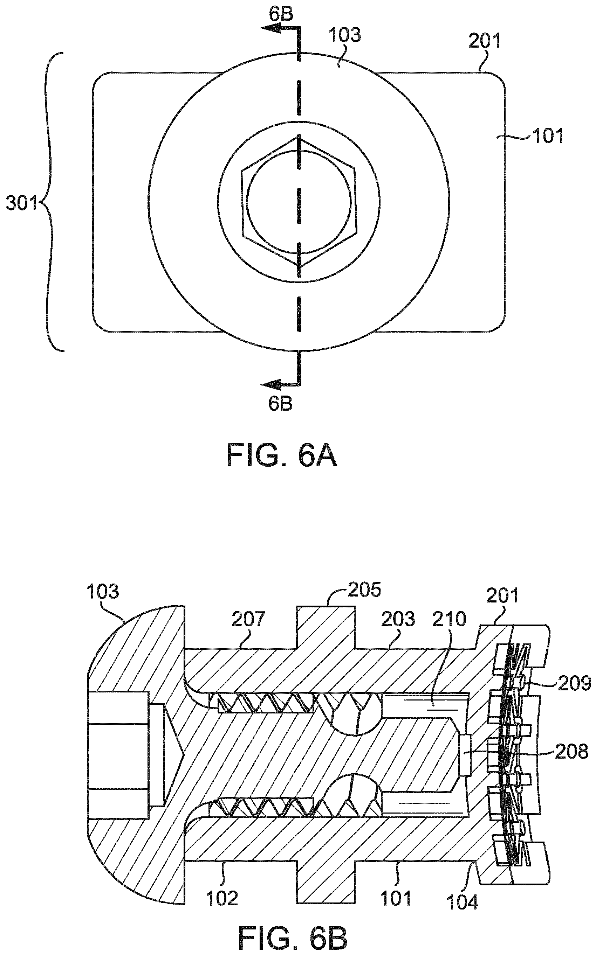

In the depicted embodiment, the attaching element (103) is an orthodontic screw having a head element monolithically constructed with an attached body element. The depicted body element comprises a first threaded section having threads corresponding to the threads of the axial channel (210) of the orthodontic post (101). The depicted threaded section is disposed proximal to the head element. A second section of the attaching element (103) is pin sized and shaped to capture and retain an archwire (701) between the pin and the base element (201) when an archwire (701) is threaded through the channel (208) and the attaching element (103) is counter-rotated into the axial channel (210) of the orthodontic post (101). In an embodiment, the attaching element (103) may be a hybrid type of orthodontic screw such as that shown in FIG. 20 of U.S. Pat. No. 10,456,219 and described in the specification thereof. The orthodontic post (101) is shown with the attaching element (103) installed in FIGs. 4, 5, 6A, and 6B.

To use the orthodontic post (101), an orthodontic or dental bonding agent (807), such as a cement or other adhesive, is applied to a tooth (805) and/or the bonding pattern (209), and the base element (201) is placed against the desired portion of the tooth (805) until the bonding agent (807) takes effect. Once a sufficient bond is established, an archwire (701) may be inserted through the through channel (208) and tightened to desired tension, and/or an orthodontic connector (803) may be secured to the body at the retaining section (207). The attaching element (103) is then counterrotated into the orthodontic post (101) to either, or both, secure the archwire (701) against the base element (201) and/or secure the orthodontic connector (803) to the retaining section (207). This process may then be repeated with one or more additional orthodontic posts (101), and/or with other orthodontic structures or devices (801), including but not necessarily limited to other types of posts, brackets, and so forth.

When adjustments are needed, the attaching element (103) may be reversed and withdrawn, fully or partially, for replacement or adjustment of either or both the archwire (701) or the orthodontic connector (803), and then the attaching element (103) may be retightened into the orthodontic post (101) to either, or both, re-secure the archwire (701) against the base element (201) and/or re-secure the orthodontic connector (803) to the retaining section (207). This process may again be repeated with one or more additional orthodontic posts (101), and/or with other orthodontic structures or devices (801), including but not necessarily limited to other types of posts, brackets, and so forth.

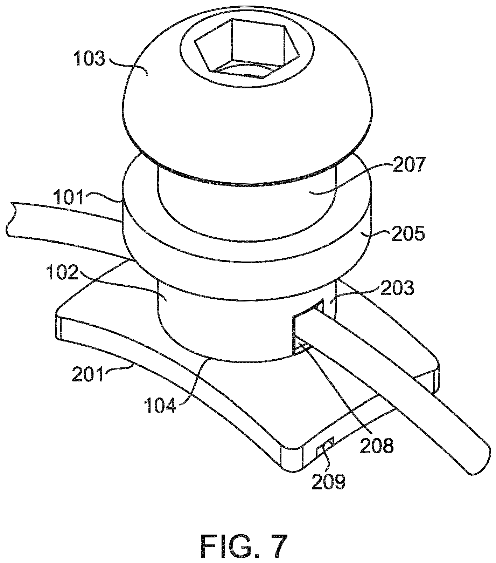

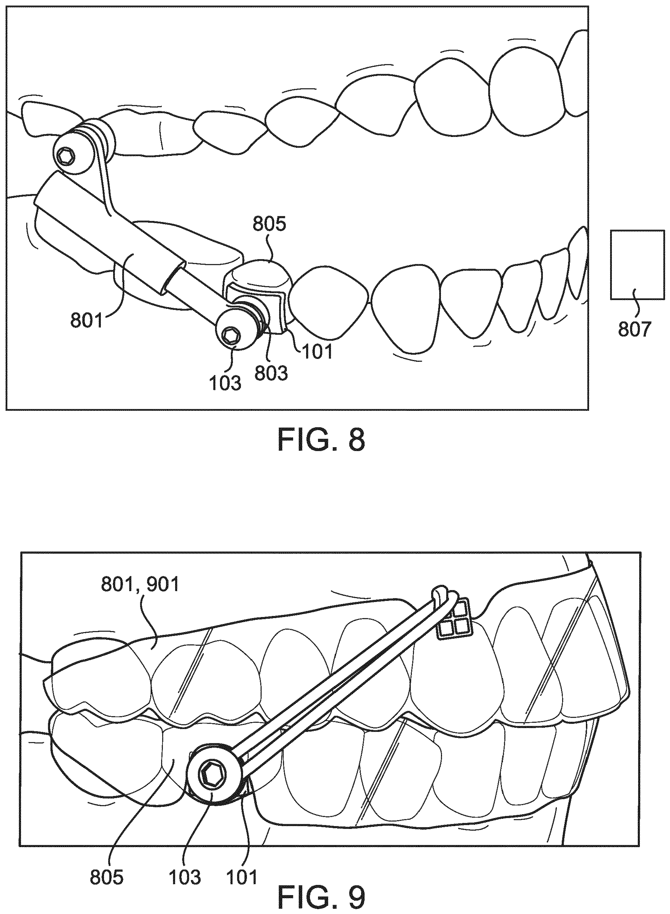

FIG. 7 depicts an embodiment of the orthodontic post (101) with an archwire attached. FIG. 8 depicts an orthodontic post (101) according to the present disclosure bonded to a tooth (805) and in use with an orthodontic appliance (801), specifically, a Herbst appliance. FIG. 9 depicts an orthodontic post (101) according to the present disclosure bonded to a tooth (805) and in use with an orthodontic appliance (901), specifically, a corrector with a transparent aligner. The orthodontic post (101) is suitable for use with, among other things, Class II and Class III correctors and/or aligners. Although the present disclosure is made in the context of various orthodontic aligners, it will be understood by a person of ordinary skill in the art that the orthodontic post described herein is suitable for use with any type of appliance in which a connector is secured to a post, and the post is bonded to the tooth.

Throughout this disclosure, geometric terms may be used to characterize, among other things, sizes, shapes, dimensions, angles, distances, and relationships. These terms may be used with qualifiers such as "generally," "about," and "approximately." One of ordinary skill in the art will understand that, in the context of this disclosure, these terms are used to describe a recognizable attempt to conform a device or component to the qualified term. By way of example and not limitation, components described as being "generally coplanar" will be recognized by one of ordinary skill in the art to not be actually coplanar in a strict geometric sense because a "plane" is a purely geometric construct that does not actually exist and no component is truly "planar," nor are two components ever truly coplanar. Variations from geometric descriptions are unavoidable due to, among other things, manufacturing tolerances resulting in shape variations, defects, imperfections, non-uniform thermal expansion, natural wear, minor variations that are nevertheless recognizable as the qualified term, and other deformations. One of ordinary skill in the art will understand how to apply geometric terms, whether or not qualified by relative terms such as "generally," "about," and "approximately," to describe a reasonable range of variations from the literal geometric term in view of these and other considerations appropriate to the context in the manner these terms are used herein, and with reference to the depiction of the qualified elements in the figures. Additionally, the use of the conjunctive and disjunctive should not necessarily be construed as limiting, and the conjunctive may include the disjunctive, and vice versa.

While the invention has been disclosed in conjunction with a description of certain embodiments, including those that are currently believed to be the preferred embodiments, the detailed description is intended to be illustrative and should not be understood to limit the scope of the present disclosure. As would be understood by one of ordinary skill in the art, embodiments other than those described in detail herein are encompassed by the present invention. Modifications and variations of the described embodiments may be made without departing from the spirit and scope of the invention.

## Claims

1. An orthodontic post comprising:
a generally cylindrical main body comprising:
a bottom end and an opposing top end;
a generally annular retaining element disposed circumferentially around said main body;
a radial bore disposed radially in said main body; and
an axial bore in communication with said radial bore, and sized and shaped to receive an attaching element; and
a base element comprising:
a top side and an opposing bottom side, said top side attached to said bottom end of said main body; and
a bonding pattern disposed on said bottom side.

2. The orthodontic post of claim 1, wherein said axial bore extends from said top end to said bottom end and comprises a threaded portion disposed at said top end.

3. The orthodontic post of claim 1 or 2, wherein said retaining element is disposed coaxially with a major axis of said main body and has a radius greater than a radius of said main body.

4. The orthodontic post of claim 3, wherein:
said radial bore is sized and shaped to receive an archwire;
said radial bore extends from one side of said main body to an opposing side;
a major axis of said radial bore generally perpendicularly intersects said major axis of said main body; and
said radial bore is disposed at said bottom end.

5. The orthodontic post of any of claims 1 to 4, wherein said bonding pattern comprises a plurality of interconnecting channels in said bottom side of said base element, said plurality of interconnecting channels being sized, shaped, and configured to increase a bondable surface area of said bottom side.

6. The orthodontic post of claim 5, wherein said base element is generally in the configuration of a rectangular prism having a flexed, arcuate cross-section in at least a first dimension; and optionally wherein said base element has a generally rectangular cross-section in a second dimension perpendicular to said first dimension.

7. The orthodontic post of claim 5 or 6, wherein said main body is attached to and centered on, and extends from, said top side of said base element such that said major axis of said main body generally perpendicularly intersects a tangent line of said arcuate cross-section at a midpoint of said top side of said base element.

8. The orthodontic post of claim 5, 6 or 7, wherein at least one channel in said plurality of channels terminates at a lateral edge of said base element.

9. The orthodontic post of any preceding claim, wherein said bottom side of said base element is sized and shaped to adhere to a tooth.

10. The orthodontic post of any preceding claim, wherein a major axis of said radial bore is generally parallel to said tangent line and generally perpendicularly intersects said major axis of said main body.

11. A orthodontic system comprising an orthodontic post as claimed in any of claims 1 to 10 and an attaching element having a head element having a radius greater than said radius of said main body, and an attached pin extending generally perpendicularly from a main axis of said head element, said pin having threads corresponding to said threaded portion of said axial bore, and optionally wherein said attaching element is a hybrid orthodontic screw.

12. A method of using the orthodontic system of claim 11, comprising:
bonding said orthodontic post to a tooth using an orthodontic adhesive;
passing an archwire through said radial bore;
receiving said pin in said axial bore;
counterrotating said threads of said pin unto said threaded portion; and
a distal end of said pin holding said archwire against said base element; the method optionally further comprising the steps of:
loosening said pin such that said distal end does not hold said archwire;
removing said archwire from said radial bore;
passing a second archwire through said radial bore;
receiving said pin in said axial bore;
counterrotating said threads of said pin unto said threaded portion; and
said distal end holding said second archwire against said base element.

13. The orthodontic system of claim 11, further comprising an orthodontic appliance having at least one orthodontic connector.

14. A method of using the orthodontic system of claim 14, comprising:
bonding said orthodontic post to a tooth using an orthodontic adhesive;
receiving said orthodontic connector on said retaining element;
receiving said pin in said axial bore;
counterrotating said threads of said pin unto said threaded portion; and
retaining said orthodontic connector between said head element and said retaining element;
the method optionally further comprising the steps of:
removing said pin from said axial bore;
removing said orthodontic connector from said orthodontic post;
adjusting said orthodontic appliance;
receiving said orthodontic connector on said retaining element;
receiving said pin in said axial bore;
counterrotating said threads of said pin unto said threaded portion; and
retaining said orthodontic connector between said head element and said retaining element.

15. The method of claim 14, wherein said orthodontic appliance comprises an aligner or an eyelet.
